# EUROPÄISCHE PATENTSCHRIFT

(11) **EP 3 464 958 B1**
(45) Veröffentlichungstag und Bekanntmachung des Hinweises auf die Patenterteilung: **18.11.2020**
(21) Anmeldenummer: 17721699.1
(22) Anmeldetag: 08.05.2017
(51) Int. Cl.: F16H 63/32

(54) **GETRIEBE MIT EINER SCHALTEINHEIT**
TRANSMISSION HAVING A SHIFTING UNIT
BOÎTE DE VITESSES À DIPOSITIF DE CHANGEMENT DE VITESSES

(30) Priorität: 07.06.2016 DE 102016210002
(43) Veröffentlichungstag der Anmeldung: 10.04.2019
(73) Patentinhaber: ZF Friedrichshafen AG, 88046 Friedrichshafen (DE)
(72) Erfinder: FRITSCHLE, Ulrich, 88069 Tettnang (DE)
(74) Vertreter: ZF Friedrichshafen AG
(86) Internationale Anmeldenummer: PCT/EP2017/060859
(87) Internationale Veröffentlichungsnummer: WO 2017/211519

(56) Entgegenhaltungen:
- EP-A2- 0 721 067
- EP-A2- 2 354 571
- WO-A1-2012/069214
- DE-A1-102005 026 230
- DE-A1-102007 044 425
- DE-A1-102014 224 612
- DE-B3- 10 336 971
- GB-A- 2 338 273
- JP-A- S59 108 125
- JP-U- S62 100 522
- US-A1- 2005 274 218

## Beschreibung

Die Erfindung betrifft ein Getriebe mit einer Schalteinheit, die eine Schaltgabel und eine Sensoranordnung zum Erfassen der Schaltgabelposition umfasst, wobei die Schaltgabel zwei Gabelschenkel und einen Befestigungsbereich zur Befestigung der Schaltgabel auf einer Schaltschiene aufweist, und wobei die Sensoranordnung einen an der Schaltgabel angeordneten Signalgeber und einen gehäusefest an einem Getriebegehäuse angeordneten Signalaufnehmer umfasst.

Getriebe mit derartigen Schalteinheiten sind insbesondere als Kraftfahrzeuggetriebe bekannt. Die Schalteinheit bzw. deren Schaltgabel wird dabei genutzt, um eine Schiebemuffe oder Schaltmuffe in Eingriff mit Gangrädern zu bringen, um so einen gewünschten Gang in dem Getriebe einzulegen. Die Sensoranordnung wird dabei insbesondere zum Überwachen, Steuern und/oder Regeln der Schaltvorgänge genutzt. Beispielsweise offenbart die WO 2012/069214 A1 eine Schalteinheit für ein Kraftfahrzeuggetriebe mit einer Schaltgabel und einer Sensoranordnung, bei der Magnete in Form einer Magnetbaugruppe auf einer mit einem Grundkörper der Schaltgabel verklebten Führung angeordnet sind und mit einem Sensor interagieren.

Ferner ist aus der US 2005/274218 A1 (Familienmitlied DE-A1-102005026230) ein Getriebe mit einer Schalteinheit bekannt, bei dem die Schalteinheit eine Schaltgabel und eine Sensoranordnung zum Erfassen einer Schaltgabelposition umfasst. Die Schaltgabel weist dabei zwei Gabelschenkel und einen Befestigungsbereich zur Befestigung der Schaltgabel auf einer Schaltschiene auf. Die Sensoranordnung umfasst einen Signalgeber an der Schaltgabel und einen gehäusefest an einem Getriebegehäuse angeordneten Signalaufnehmer. Der Signalgeber ist dabei in einer Ausnehmung der Schaltgabel und unmittelbar an der Schaltgabel angeordnet.

Es ist die Aufgabe der vorliegenden Erfindung ein Getriebe mit einer Schalteinheit, umfassend eine Schaltgabel und eine Sensoranordnung zum Erfassen der Schaltgabelposition zu schaffen, bei dem die Schalteinheit möglichst kostengünstig herstellbar ist, wenig Bauraum beansprucht und eine zuverlässige Funktion gewährleistet ist. Diese Aufgabe wird durch ein Getriebe gemäß Anspruch 1 gelöst. Vorteilhafte Weiterbildungen der Erfindung sind in den abhängigen Ansprüchen angegeben.

Demnach wird ein Getriebe mit einer Schalteinheit beansprucht, bei dem die Schalteinheit eine Schaltgabel und eine Sensoranordnung zum Erfassen der Schaltgabelposition umfasst. Die Sensoranordnung zum Erfassen der Schaltgabelposition kann als Positions- oder Wegsensor bezeichnet werden. Mit der Sensoranordnung wird insbesondere die Position bzw. Schaltstellung der Schaltgabel in axialer Richtung erfasst. Der Begriff axial ist hierbei bezogen auf eine Verschiebeachse einer Schaltschiene, auf der die Schaltgabel befestigt ist. Selbstverständlich kann das Getriebe neben der einen Schalteinheit auch noch weitere Schalteinheiten umfassen, und die Schalteinheit kann auch weitere Schaltgabeln und/oder Sensoranordnungen umfassen.

Die Schaltgabel weist zwei Gabelschenkel und einen Befestigungsbereich zur Befestigung der Schaltgabel auf einer Schaltschiene auf. Die Enden der beiden Gabelschenkel bzw. daran befestigte Gleitstücke können so in eine Umlaufnut einer Schiebemuffe eingreifen, dass diese zum Zweck des Gangschaltens axial verschiebbar ist. Die Sensoranordnung umfasst einen Signalgeber an der Schaltgabel und einen Signalaufnehmer, der gehäusefest an einem Getriebegehäuse angeordnet ist.

Ferner ist vorgesehen, dass die Gabelschenkel und der Befestigungsbereich zusammen als einteiliger Schaltgabelkörper gefertigt sind, und dass der Schaltgabelkörper eine Ausnehmung zur Aufnahme des Signalgebers aufweist. In der genannten Ausnehmung ist der Signalgeber unmittelbar am Schaltgabelkörper angeordnet, das heißt ohne ein zwischen dem Signalgeber und dem Schaltgabelkörper angeordnetes Bauteil wie eine Halterung, ein Träger, ein Arm oder ein Polblech.

Die einteilige Bauweise des Schaltgabelkörpers sowie die Anordnung des Signalgebers unmittelbar an dem Schaltgabelkörper bewirken eine einfache, kostengünstige Herstellung und eine kompakte Bauweise. Der Fertigungs- und Montageaufwand für diese Art der Schalteinheit ist geringer als bei Schalteinheiten und Schaltgabeln, die aus einer größeren Anzahl an einzelnen Bauteilen bestehen. Ein weiterer Vorteil der Anordnung des Signalgebers in der Ausnehmung des Schaltgabelkörpers ist der Wegfall von Fertigungstoleranzen, die beim Zusammenfügen mehrerer Bauteile aufsummieren können und einer reproduzierbaren genauen Positionierung des Signalgebers auf der Schaltgabel entgegenstehen. Eine solche Toleranzkette würde beispielsweise ein zeitaufwändiges Ausrichten des Signalgebers nach dem Zusammenbau erfordern. Demgegenüber ermöglicht die vorliegende Erfindung eine genaue Positionierung des Signalgebers auf dem Schaltgabelkörper und eine zuverlässige und genaue Funktion der Sensoranordnung ohne zusätzlichen Aufwand nach dem Zusammenbau.

Erfindungsgemäß besteht der Schaltgabelkörper aus einem nichtferritischen Material und der Signalgeber ist ein Magnet. Die Sensoranordnung kann beispielsweise als Hall-Sensor ausgeführt sein, bei dem der Signalgeber ein Permanentmagnet ist. Dieser Signalgeber ist in der Ausnehmung des Schaltgabelkörpers angeordnet und das Signal des Signalgebers wird von dem Signalaufnehmer erfasst, wodurch die Position des Signalgebers und damit des Schaltgabelkörpers ermittelbar ist. Das nichtferritische Material des Schaltgabelkörpers bewirkt, dass das Magnetfeld des Magnets nicht beeinflusst bzw. verfälscht wird, wodurch die sichere Funktion der Sensoranordnung gewährleistet wird. Beispielsweise kann der Schaltgabelkörper aus Aluminium oder einer Aluminiumlegierung gefertigt sein. Daneben sind beispielsweise auch Kunststoffe geeignet als Material für den Schaltgabelkörper.

Durch die geringe Festigkeit dieser nichtferritischen Materialien kann es erforderlich sein eine spezielle Befestigung des Schaltgabelkörpers auf der Schaltschiene vorzusehen. Damit die Schaltkräfte aus der Schaltschiene und die Kippmomente aus der Schaltgabel sicher übertragen werden können, kann beispielsweise vorgesehen sein, dass der Schaltgabelkörper in seinem Befestigungsbereich eine Schaltschienenbohrung aufweist über die der Schaltgabelkörper auf der Schaltschiene befestigt ist, und dass an beiden Enden der Schaltschienenbohrung je ein Stützring aus Stahl angeordnet ist. Die Stützringe aus Stahl nehmen so zumindest einen großen Anteil der Stützkräfte und Kippmomente auf, die insbesondere während eines Schaltvorgangs zwischen der Schaltschiene und dem Schaltgabelkörper wirken. Die Stützringe aus Stahl können beispielsweise in die Schaltschienenbohrung eingepresst sein und aus jeder Art von Stahl bestehen, deren Materialeigenschaften geeignet sind die Stützkräfte dauerhaft aufzunehmen und in den Schaltgabelkörper abzuleiten.

Zur axialen Fixierung des Schaltgabelkörpers auf der Schaltschiene kann auf der Schaltschiene zumindest ein Sicherungsring, beispielsweise ein Sprengring, vorgesehen sein. Dabei kann jeweils ein Sicherungsring axial direkt anliegend an den jeweils zugeordneten Stützring angeordnet sein, um eine kompakte und dauerfeste Befestigung der Schaltgabel auf der Schaltschiene zu erreichen. Im Hinblick auf eine noch kompaktere, vorteilhafte Ausführung weisen die Stützringe einen L-förmigen Querschnitt auf, wobei der Sicherungsring dann radial innerhalb eines axial auskragenden Schenkels des jeweils zugeordneten Stützrings angeordnet wird.

Gemäß einer bevorzugten Ausführung ist die Ausnehmung derart geformt, dass der Signalgeber durch die Form der Ausnehmung lagegenau auf dem Schaltgabelkörper positionierbar ist. Beispielsweise kann als Ausnehmung eine quaderförmige Ausnehmung vorgesehen sein, in die ein dazu passender quaderförmiger Magnet als Sensorgeber eingelegt wird. Optional kann der Magnet auch in der Ausnehmung befestigt werden, beispielsweise durch Kleben. Abgesehen von einem Klebstoff sind jedoch keine Befestigungsmittel vorgesehen, sodass der Signalgeber unmittelbar auf dem Schaltgabelkörper angeordnet und durch die Ausnehmung positioniert ist.

Vorzugsweise umfasst die Schalteinheit einen an dem Getriebegehäuse befestigten Sensorhalter, der gegenüber dem Signalgeber so positioniert ist, dass der Signalgeber in der Ausnehmung der Schaltgabel gehalten wird. Der gehäusefeste Sensorhalter ist also derart im Getriebegehäuse angeordnet, dass er direkt gegenüber dem auf der Schaltgabel angeordneten Signalgeber positioniert ist und so ein Herausfallen des Signalgebers aus der Ausnehmung verhindert. Zwischen dem Sensorhalter und dem Signalgeber besteht ein Berührungskontakt oder ein so geringer Abstand, dass der Signalgeber nicht aus der Ausnehmung herausfallen kann. Der Sensorhalter ermöglicht so die zuverlässige Funktion der Sensoranordnung, obwohl der Signalgeber beispielsweise nur in die Ausnehmung eingelegt und nicht anderweitig befestigt ist. Der Sensorhalter kann als Gehäuse für den Signalaufnehmer ausgebildet sein, sodass der Signalaufnehmer in dem Sensorhalter angeordnet ist. Gegebenenfalls können auch weitere Elemente der Sensoranordnung wie eine Auswerteelektronik und/oder eine Schnittstelle zu einer Steuereinrichtung in dem Sensorhalter untergebracht sein.

Wenn die Schaltgabel bei einem Schaltvorgang in dem Getriebegehäuse verschoben wird, dann bewegt sich der Signalgeber mit der Schaltgabel gegenüber dem gehäusefesten Sensorhalter. Dazu kann der Sensorhalter eine Gleitfläche aufweisen, an der der Signalgeber beim Bewegen der Schaltgabel im Getriebegehäuse entlang gleitet.

Um eine weitere Funktion zu erfüllen kann der Sensorhalter derart geformt sein, dass er den Signalgeber gegen Spritzöl abschirmt. Dazu weist der Sensorhalter bevorzugt eine Vertiefung auf, in die der Signalgeber hineinragt. Die Vertiefung kann beispielsweise als Nut ausgebildet sein, wobei sich die Nut in axialer Richtung erstreckt und die Länge der Nut zumindest der maximalen axialen Bewegung des Signalgebers mit der Schaltgabel in dem Getriebegehäuse entspricht.

Die Abschirmung des Signalgebers gegen Spritzöl ist besonders dann vorteilhaft, wenn der Signalgeber als Magnet ausgebildet ist. Die Abschirmung verhindert dann, dass sich auf dem Magneten Eisenschlamm ablagert, der im Öl enthalten ist. Größere Ablagerungen von Eisenschlamm an dem Magneten beeinflussen dessen Magnetfeld und können zu Meßfehlern einer solchen Sensoranordnung führen.

Im Folgenden wird die Erfindung anhand eines in den Figuren abgebildeten Ausführungsbeispiels näher erläutert.

Es zeigen
- Fig. 1: einen Ausschnitt aus einem erfindungsgemäßen Getriebe mit einer Schalteinheit in axialer Blickrichtung und
- Fig. 2: einen Ausschnitt aus dem Getriebe aus der Fig. 1 mit der Schalteinheit in einer Seitenansicht.

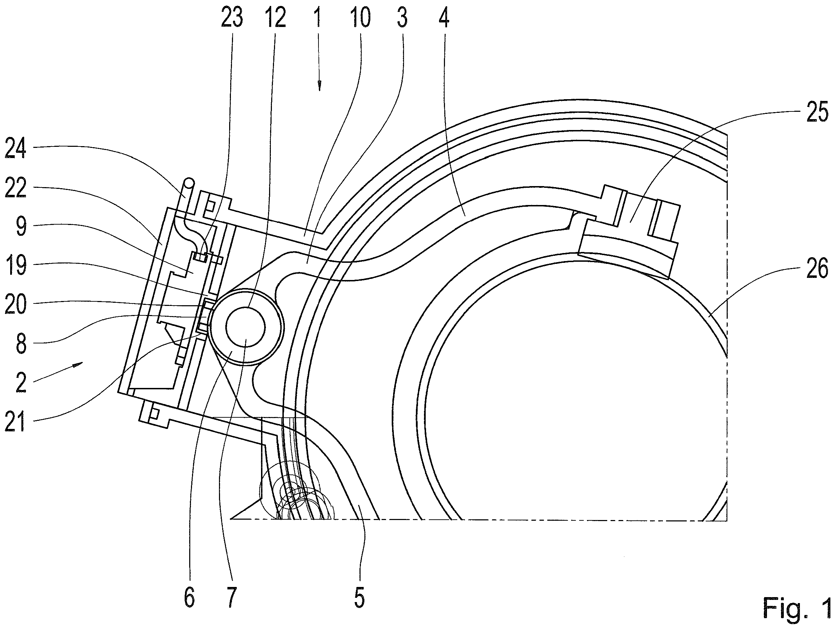

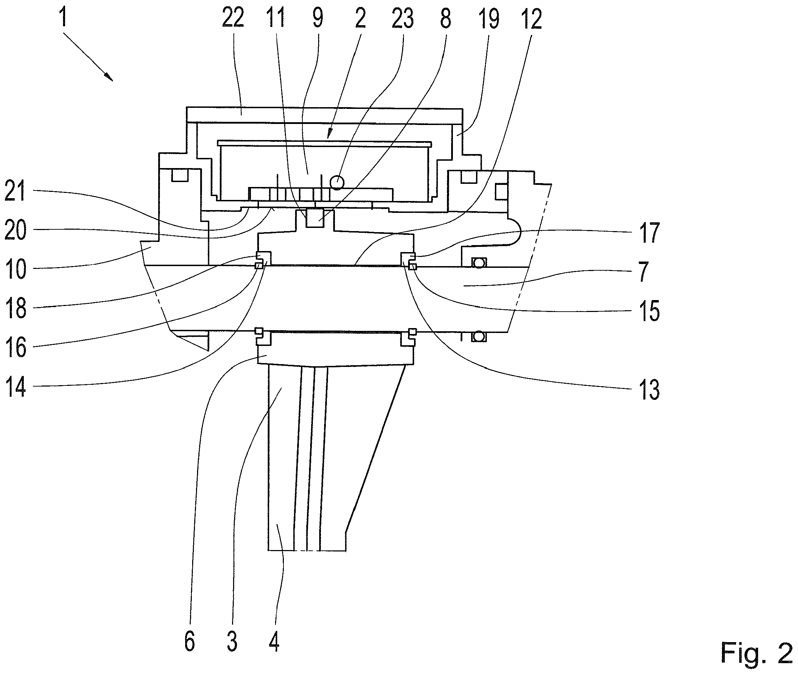

In den beiden Fig. 1 und 2 ist jeweils der Bereich des Getriebes gezeigt, in dem die Schalteinheit 1 angeordnet ist. Die Schalteinheit 1 umfasst eine Schaltgabel und eine Sensoranordnung 2 zum Erfassen der Schaltgabelposition, wobei die Schaltgabel zwei Gabelschenkel 4, 5 und einen Befestigungsbereich 6 zur Befestigung der Schaltgabel auf einer Schaltschiene 7 aufweist. Im Bereich des freien Endes jedes Gabelschenkels ist ein Gleitstein 25 angeordnet, der in eine Umfangsnut 26 einer zugeordneten Schaltmuffe eingreift, um diese beim Schaltvorgang in axialer Richtung verschieben zu können.

Die Sensoranordnung 2 besteht aus einem Signalgeber 8 an der Schaltgabel und einen Signalaufnehmer 9, der gehäusefest an einem Getriebegehäuse 10 angeordnet ist. Der Signalgeber 8 ist ein Permanentmagnet.

Die Gabelschenkel 4, 5 und der Befestigungsbereich 6 der Schaltgabel bilden zusammen den einteiligen Schaltgabelkörper 3, der in diesem Ausführungsbeispiel aus Aluminium besteht. Der Schaltgabelkörper 3 weist eine Ausnehmung 11 zur Aufnahme des Signalgebers 8 auf. Die Ausnehmung 11 ist im Befestigungsbereich 6 des Schaltgabelkörpers 3 angeordnet und als gefräste Tasche ausgebildet. Die Abmessungen der Ausnehmung 11 sind an die Abmessungen des Signalgebers 8 angepasst, sodass der Signalgeber 8 lagegenau in der Ausnehmung 11 positioniert wird. Im vorliegenden Beispiel weist sowohl der Signalgeber 8 als auch die Ausnehmung 11 eine quaderförmige Form auf. Dabei entsprechen die Abmessungen des Signalgebers 8 im Wesentlichen den Abmessungen der Ausnehmung 11. Lediglich in der dem Signalaufnehmer 9 zugewandten Richtung weist der Signalgeber 8 eine etwas größere Abmessung auf, sodass er etwas aus der Ausnehmung 11 herausragt.

Der Schaltgabelkörper 3 weist in seinem Befestigungsbereich 6 eine Schaltschienenbohrung 12 auf, durch welche die Schaltschiene 7 hindurchgeführt ist. Der Schaltgabelkörper 3 ist auf der Schaltschiene 7 befestigt. Zur axialen Fixierung des Schaltgabelkörpers 3 auf der Schaltschiene 7 ist an jedem Ende der Schaltschienenbohrung 12 anliegend jeweils ein Sicherungsring 15, 16 auf der Schaltschiene 7 angeordnet.

An beiden Enden der Schaltschienenbohrung 12 ist jeweils ein Stützring 13, 14 aus Stahl in den Schaltgabelkörper 3 eingepresst. Die Stützringe 13 und 14 sorgen dafür, dass sich der Schaltgabelkörper 3 aus dem relativ weichen Aluminium auch auf Dauer im Bereich der Schaltschienenbohrung 12 nicht verformt, und dass die Schaltkräfte aus der Schaltschiene 7 und die Kippmomente aus der Schaltgabel sicher übertragen werden. Die Stützringe 13, 14 weisen einen L-förmigen Querschnitt mit jeweils zwei Schenkeln auf. Jeweils einer der oben genannten Sicherungsringe 15, 16 ist radial innerhalb des axial auskragenden Schenkels 17, 18 des jeweils zugeordneten Stützrings 13, 14 angeordnet. Auf diese Weise lassen sich die Sicherungsringe 15 und 16 innerhalb der axialen Abmessungen des Schaltgabelkörpers 3 anordnen, was wiederum eine in axialer Richtung kompakt bauende Schalteinheit 1 ermöglicht und den geringen verfügbaren Bauraum in dem Getriebegehäuse 10 optimal ausnutzt.

Die Schalteinheit 1 umfasst ferner einen an dem Getriebegehäuse 10 befestigten Sensorhalter 19. Der Sensorhalter 19 ist gegenüber dem Signalgeber 8 so positioniert, dass der Signalgeber 8 durch den Sensorhalter 19 in der Ausnehmung 11 des Schaltgabelkörpers 3 gehalten wird. Der Sensorhalter 19 ist also an einer Stelle des Getriebegehäuses 10 angeordnet, an der er dem Signalgeber 8 gegenüberliegt. Der Sensorhalter 19 weist eine Gleitfläche 20 auf, an der der Signalgeber 8 beim Bewegen der Schaltgabel im Getriebegehäuse 10 entlang gleitet. In anderen Ausführungsbeispielen kann zwischen dem Signalgeber 8 und dem Sensorhalter 19 auch ein geringer Abstand vorhanden sein, wobei der Abstand maximal so groß sein darf, dass der Signalgeber 8 nicht aus der Ausnehmung 11 herausfallen kann und die Signalübertragung von dem Signalgeber 8 auf den Signalaufnehmer 9 noch zuverlässig funktioniert.

Der Sensorhalter 19 weist eine Vertiefung 21 auf, die so angeordnet und geformt ist, dass der Signalgeber 8 in sie hineinragt. Dadurch bildet die Vertiefung 21 eine Abschirmung des Signalgebers 8 gegen Spritzöl. Die Vertiefung 21 ist als flache Nut ausgebildet, wobei sich die Nut in axialer Richtung, d.h. in Längsrichtung der Schaltschiene, erstreckt. Die Bodenfläche der Vertiefung 21 bildet die oben erwähnte Gleitfläche 20, an der der Signalgeber 8 entlang gleitet, wenn die Schaltgabel bei einem Schaltvorgang in dem Getriebe verschoben wird.

Der Sensorhalter 19 ist als Gehäuse ausgebildet, in dem der Signalaufnehmer 9 angeordnet und befestigt ist. Das Gehäuse bzw. der Sensorhalter 19 wird durch einen Deckel 22 verschlossen, sodass sich der Signalaufnehmer 9 in einem geschützten Innenraum des Sensorhalters 19 befindet. In diesem Innenraum ist auch eine Schnittstelle 23, über die die Sensoranordnung 2 mit einer Steuereinrichtung, beispielsweise einer Getriebesteuerung, verbindbar ist. Im vorliegenden Ausführungsbeispiel ist diese Verbindung als Kabel 24 ausgeführt, sie kann jedoch auch kabellos realisiert werden.

### Bezugszeichen

- 1: Schalteinheit
- 2: Sensoranordnung
- 3: Schaltgabelkörper
- 4: Gabelschenkel
- 5: Gabelschenkel
- 6: Befestigungsbereich
- 7: Schaltschiene
- 8: Signalgeber
- 9: Signalaufnehmer
- 10: Getriebegehäuse
- 11: Ausnehmung
- 12: Schaltschienenbohrung
- 13: Stützring
- 14: Stützring
- 15: Sicherungsring
- 16: Sicherungsring
- 17: Schenkel
- 18: Schenkel
- 19: Sensorhalter
- 20: Gleitfläche
- 21: Vertiefung
- 22: Deckel
- 23: Schnittstelle
- 24: Kabel
- 25: Gleitstein
- 26: Umfangsnut

## Patentansprüche

1. Getriebe mit einer Schalteinheit (1), wobei die Schalteinheit (1) eine Schaltgabel und eine Sensoranordnung (2) zum Erfassen einer Schaltgabelposition umfasst, wobei die Schaltgabel zwei Gabelschenkel (4, 5) und einen Befestigungsbereich (6) zur Befestigung der Schaltgabel auf einer Schaltschiene (7) aufweist, wobei die Sensoranordnung (2) einen Signalgeber (8) an der Schaltgabel und einen gehäusefest an einem Getriebegehäuse (10) angeordneten Signalaufnehmer (9) umfasst, wobei die Gabelschenkel (4, 5) und der Befestigungsbereich (6) zusammen als einteiliger Schaltgabelkörper (3) gefertigt sind, und wobei der Schaltgabelkörper (3) eine Ausnehmung (11) zur Aufnahme des Signalgebers (8) aufweist, wobei der Signalgeber (8) unmittelbar am Schaltgabelkörper (3) angeordnet ist, **dadurch gekennzeichnet, dass** der Schaltgabelkörper (3) aus einem nichtferritischen Material besteht, und dass der Signalgeber (8) ein Magnet ist.

2. Getriebe nach Anspruch 1, **dadurch gekennzeichnet, dass** der Schaltgabelkörper (3) aus Aluminium oder einer Aluminiumlegierung gefertigt ist.

3. Getriebe nach einem der vorherigen Ansprüche, **dadurch gekennzeichnet, dass** die Ausnehmung (11) derart geformt ist, dass der Signalgeber (8) durch die Form der Ausnehmung (11) lagegenau auf dem Schaltgabelkörper (3) positionierbar ist.

4. Getriebe nach einem der vorherigen Ansprüche, **dadurch gekennzeichnet, dass** die Schalteinheit (1) einen an dem Getriebegehäuse (10) befestigten Sensorhalter (19) umfasst, der gegenüber dem Signalgeber (8) so positioniert ist, dass der Signalgeber (8) durch den Sensorhalter (19) in der Ausnehmung (11) des Schaltgabelkörpers (3) gehalten wird.

5. Getriebe nach Anspruch 4, **dadurch gekennzeichnet, dass** der Sensorhalter (19) eine Gleitfläche (20) aufweist, an der der Signalgeber (8) beim Bewegen der Schaltgabel im Getriebegehäuse (10) entlang gleitet.

6. Getriebe nach Anspruch 4 oder 5, **dadurch gekennzeichnet, dass** der Sensorhalter (19) derart geformt ist, dass er den Signalgeber (8) gegen Spritzöl abschirmt.

7. Getriebe nach Anspruch 6, **dadurch gekennzeichnet, dass** der Sensorhalter (19) eine Vertiefung (21) aufweist, in die der Signalgeber (8) hineinragt.

8. Getriebe nach einem der Ansprüche 4 bis 7, **dadurch gekennzeichnet, dass** der Sensorhalter (19) als Gehäuse ausgebildet ist, und dass der Signalaufnehmer (9) in dem Gehäuse angeordnet ist.

## Claims

1. Transmission having a shifting unit (1), wherein the shifting unit (1) comprises a shifting fork and a sensor assembly (2) for sensing a shifting fork position, wherein the shifting fork has two fork limbs (4, 5) and a fastening region (6) for fastening the shifting fork on a shifting rail (7), wherein the sensor assembly (2) comprises a signal encoder (8) on the shifting fork and a signal pickup (9) which is arranged fixed to a transmission housing (10), wherein the fork limbs (4, 5) and the fastening region (6) are fabricated together as a single-piece shifting fork body (3), and wherein the shifting fork body (3) has a recess (11) for accommodating the signal encoder (8), wherein the signal encoder (8) is arranged directly on the shifting fork body (3), **characterized in that** the shifting fork body (3) is composed of a non-ferritic material, and **in that** the signal encoder (8) is a magnet.

2. Transmission according to Claim 1, **characterized in that** the shifting fork body (3) is fabricated from aluminium or an aluminium alloy.

3. Transmission according to one of the preceding claims, **characterized in that** the recess (11) is shaped in such a way that the signal encoder (8) can be positioned precisely on the shifting fork body (3) by virtue of the shape of the recess (11).

4. Transmission according to one of the preceding claims, **characterized in that** the shifting unit (1) comprises a sensor mount (19) which is fastened to the transmission housing (10) and is positioned with respect to the signal encoder (8) in such a way that the signal encoder (8) is held in the recess (11) in the shifting fork body (3) by the sensor mount (19).

5. Transmission according to Claim 4, **characterized in that** the sensor mount (19) has a sliding face (20) along which the signal encoder (8) slides when the shifting fork moves in the transmission housing (10).

6. Transmission according to Claim 4 or 5, **characterized in that** the sensor mount (19) is shaped in such a way that it shields the signal encoder (8) from splash oil.

7. Transmission according to Claim 6, **characterized in that** the sensor mount (19) has a depression (21) into which the signal encoder (8) projects.

8. Transmission according to one of Claims 4 to 7, **characterized in that** the sensor mount (19) is embodied as a housing, and **in that** the signal pickup (9) is arranged in the housing.

## Revendications

1. Boîte de vitesses, comprenant une unité de changement de vitesse (1), l'unité de changement de vitesse (1) comprenant une fourchette de sélection et un agencement de capteurs (2) pour détecter une position de fourchette de sélection, la fourchette de sélection présentant deux branches de fourchette (4, 5) et une zone de fixation (6) pour fixer la fourchette de sélection sur une tige de commande (7), l'agencement de capteurs (2) comprenant un émetteur de signaux (8) au niveau de la fourchette de sélection et un récepteur de signaux (9) disposé de manière fixe sur un carter de boîte de vitesses (10), dans laquelle les branches de fourchette (4, 5) et la zone de fixation (6) sont fabriquées ensemble sous la forme d'un corps de fourchette de sélection (3) d'un seul tenant, le corps de fourchette de sélection (3) présentant un évidement (11) pour recevoir l'émetteur de signaux (8), l'émetteur de signaux (8) étant disposé directement sur le corps de fourchette de sélection (3),
**caractérisée en ce que** le corps de fourchette de sélection (3) est composé d'un matériau non ferritique et **en ce que** l'émetteur de signaux (8) est un aimant.

2. Boîte de vitesses selon la revendication 1, **caractérisée en ce que** le corps de fourchette de sélection (3) est fabriqué en aluminium ou en alliage d'aluminium.

3. Boîte de vitesses selon l'une quelconque des revendications précédentes, **caractérisée en ce que** l'évidement (11) est formé de telle sorte que l'émetteur de signaux (8) peut être positionné sur le corps de fourchette de sélection (3) dans la position exacte grâce à la forme de l'évidement (11).

4. Boîte de vitesses selon l'une quelconque des revendications précédentes, **caractérisée en ce que** l'unité de changement de vitesse (1) comprend un support de capteur (19) fixé au carter de boîte de vitesses (10) et qui est positionné à l'opposé de l'émetteur de signaux (8) de telle sorte que l'émetteur de signaux (8) est maintenu par le support de capteur (19) dans l'évidement (11) du corps de fourchette de sélection (3).

5. Boîte de vitesses selon la revendication 4, **caractérisée en ce que** le support de capteur (19) présente une surface de glissement (20) le long de laquelle glisse l'émetteur de signaux (8) lorsque la fourchette de sélection est déplacée dans le carter de boîte de vitesses (10).

6. Boîte de vitesses selon la revendication 4 ou 5, **caractérisée en ce que** le support de capteur (19) est formé de telle sorte qu'il protège l'émetteur de signaux (8) des projections d'huile.

7. Boîte de vitesses selon la revendication 6, **caractérisée en ce que** le support de capteur (19) présente un creux (21) dans lequel l'émetteur de signaux (8) fait saillie.

8. Boîte de vitesses selon l'une quelconque des revendications 4 à 7, **caractérisée en ce que** le support de capteur (19) est réalisé sous la forme d'un boîtier et **en ce que** le récepteur de signaux (9) est disposé dans le boîtier.
